# EUROPEAN PATENT APPLICATION

(11) **EP 4 651 054 A1**
(43) Date of publication of application: **19.11.2025**
(21) Application number: 24175536.2
(22) Date of filing: 13.05.2024
(51) Int. Cl.: G06Q 20/06, G06Q 20/36, G06Q 20/38

(54) **METHOD AND PRINTER UNIT FOR PRINTING A PHYSICAL NOTE FOR ACCESSING A DIGITAL ASSET**

(71) Applicant: PrintDreams International AB, 11137 Stockholm (SE)
(72) Inventor: Breton, Alex, 83771 Nyland (SE)
(74) Representative: Groth & Co. KB

(57) **Abstract**

Method for printing a physical note (7) for accessing a digital asset (6) with a printer unit or its host (2), whereas the printer unit or its host (2) secretly stores a first private key (4) associated with a first digital wallet (5), which may be a smart contract-based wallet, comprising the steps:
- creating a second private key (10), such that a second digital wallet (11) -which also may be a smart contract-based wallet- is created by the printer unit or its host (2);
- signing a transaction, with or without deployment, of a digital asset (6) from the first digital wallet (5) to the second digital wallet (11) by means of the stored first private key (4) by the printer unit or its host (2) with a signature;
- providing the second private key (10) by the printer unit or its host (2);
- providing the signature by the printer unit or its host (2) ;
whereas providing the second private key (10) is effected by-printing the second private key (10) and/or providing the signature (13) is effected by printing the signature (13), such that a physical note (7) is generated, whereas the digital asset (6) is accessible by means of the physical note (7).

## Description

The disclosure concerns a method for printing a physical note for accessing a digital asset, a printer unit, and/or its host for printing a physical note for accessing a digital asset.

In the current era of extensive digitalization, it is becoming more necessary to intensify the connection between the digital world and the physical world in order to provide a purpose to the digital world, added benefit to the physical world, and to reduce barriers between these two. For example, a disruptive technology is the digitalization of currency by means of digital crypto currency. A priori there is no physical equivalent to a unit of crypto currency as there is for conventional currency in terms of coins and bank notes. To make the use of crypto currency more convenient and versatile for a broader public (without in-depth technical knowledge), it is possible to print notes which resemble a physical equivalent of, for example, one Bitcoin. Typically, crypto currency is realized by means of distributed ledger technology (DLT or blockchain), whereas units of currency are stored in wallets. The wallets are accounts of the DLT network. In newer generations of DLT networks, smart contract-based wallets have appeared. A smart contract is a self-executing program with the terms of the agreement between the sender and the receiver being directly written into lines of code. The code and the agreements contained therein exist across the decentralized DLT network.

In order to transfer currency from a sender's wallet to a receiving wallet, the sender needs to have a private key associated with the sender's wallet in order to authorize the transaction. In other words, the wallet acts approximately as a "safe" for digital currency or other digital assets such as non-fungible tokens (NFT), whereas the private key is the key to the wallet. As long as there is no digital copy of the private key, the wallet can only be accessed by means of the printed note. On top of the inherent protection mechanism of crypto currencies against double-spending, there are multiple copy-protection mechanisms for the printed notes such as microtext, watermarks, ultraviolet or infrared luminescent inks, secret layers on QR-codes, and so on and so forth. The printed note is therefore a unique physical key to a digital wallet which may be smart contract based. In case the note is physically transferred from one person to another, also the access to the wallet is transferred. The note can therefore act approximately as a conventional money bank note or coin. The recipient may verify the funds in the wallet using the public key.

A major drawback of existing crypto currencies is that transactions can take a long time to be validated and broadcast to all nodes of their blockchains. That has prevented them from becoming useful for ordinary purchases and transactions. In other words, crypto currency is not easily transactable in the present status-quo. The ability to generate beforehand a certain number of transactions into different values as printed assets, allows any recipient of a payment to verify the transaction and even to immediately transfer the value of the printed asset into another digital wallet of their choice.

Another drawback of existing crypto currencies is portability. Until now, the only safe means of storing crypto currencies has been through the usage of so-called cold storage devices. These are electronic client apparatus with a secure element where the private key can be safely stored and never leaves the secure element. It is only used to sign transactions via a passcode protected user interface which needs to run on an additional computing and network host device. The signature process along with the need of two different devices interacting with one another has a negative impact on the portability of crypto currencies.

A third characteristic of existing crypto currencies that sometimes may be considered as drawback is the lack of individual traceability. All crypto transactions run on a public ledger meaning that wallet addresses, amounts and timestamps are accessible to anyone. However, the individuals behind the addresses are oftentimes completely anonymous which has made crypto an attractive financial tool for criminals, money laundering schemes and even terrorism. That is the reason why in some geographies, trading with crypto currencies is forbidden or banned.

As is the case with distributed ledger technology, also the printing of the aforementioned notes does not need to be centralized but can be done by any authorized user at any time on demand. A printer along with its host can therefore act approximately as a "private ATM" for digital currency.

For example, a method for printing a paper wallet for digital currency is known from US 2015 0 254 640 A1. A digital currency wallet generator comprises a processor configured to generate a private key and a public key, which form a (new) digital currency wallet. The digital currency wallet generator further comprises an internal printer configured to print a paper wallet including information of the public key and the private key. The digital currency wallet generator does not store any information regarding the (generated) private key and the public key after the internal printer prints the paper wallet.

A drawback of current systems for printing digital wallets regards the security of the main wallet from which currency or other digital assets are transferred to the printed wallet. In case the digital private key of the main wallet is stolen, the currency stored in the main wallet might also be stolen.

It is an object of the invention to alleviate or eliminate at least some of the drawbacks of the prior art. In particular, it is an object of the present disclosure to provide a method, a printer unit, and its host for printing a physical note for accessing a digital asset with increased security measures for protecting digital assets.

This object is achieved by a method for printing a physical note for accessing a digital asset with a printer unit and its host, whereas the printer unit or its host secretly stores a first private key associated with a first digital wallet, comprising the steps:
- creating a second pair of keys of both a public key and a private key with enough entropy, such that a second smart contract-based digital wallet is created by the printer unit or its host;
- signing a transaction of a digital asset without deployment from the first digital wallet to the second digital wallet by means of the stored first private key by the printer unit or its host with a signature;
- calculating the smart contract wallet address as a hash function of the smart contract code and data where the public key is contained;
- providing the second private key by the printer unit or its host;
- providing the signature by the printer unit or its host;
whereas providing the second private key is effected by printing the second private key and/or providing the signature is effected by printing the signature, such that a physical note is generated, whereas the digital asset is accessible by means of the physical note by deploying the second digital wallet and sending all existing digital assets in a transaction containing the compiled code of the smart contract to a destination address of a third digital wallet or back to the original first digital wallet. Once the digital assets reach the destination address, the second digital wallet self-destructs and becomes obsolete.

Further this object is achieved by a printer unit for printing a physical note for accessing a digital asset, with
- a computer-readable storage medium, whereas the computer-readable storage medium securely stores a first private key associated with a first digital wallet;
- a data-processing apparatus comprising means for carrying out the following steps:
   - creating from true entropy a second pair of keys, such that a second digital wallet is created. True entropy can be achieved through a true random number generator built in the apparatus or through random human-powered movement to create a large enough set of sensor readings from gyro, accelerometer, surface navigation sensor and/or other types of motion sensors;
   - signing a transaction of a digital asset from the first digital wallet to the second digital wallet by means of the stored first private key with a signature;
   - providing the second private key;
   - providing the signature;
- a printer configured for carrying out the following step:
   - printing the second private key and/or the signature, such that a physical note is generated, whereas the digital asset is accessible by means of the physical note.

A digital asset is a digital asset, which an owner of the digital asset holds and might intend to transmit to another person or entity at some point, similar to a physical asset. The digital asset can be stored in a digital wallet, which may be, for example, an account in a DLT (distributed ledger technology) network or system. The digital asset can be transferred from one digital wallet to another digital wallet. In order to authorize the transfer of the digital asset, for example from a sending wallet to a receiving wallet, the transfer needs to be authorized by means of a private key associated with the sending wallet. The private key is also sufficient to authorize a transfer of stored digital assets in a digital wallet. Thus, it is crucial to keep the private key of a digital wallet safe. Additionally, information, such as an address, of the receiving wallet may be necessary to process the transfer. This information may be provided in terms of a public key associated with the receiving wallet. A private key associated with a digital wallet and a public key associated with the same digital wallet form a key pair as described above. The key pair may be understood as the digital wallet. The public key or an address associated with the public key may be necessary to receive a digital asset. The public key might be embedded in the data of a smart contract linked to an undeployed wallet with an address calculated as a hash function of the smart contract code and data. The private key is necessary to authorize a transfer from the sending wallet.

The private key allows full control over the wallet associated with the private key. The public key may be derived based on the private key but not vice versa. It is not possible to derive the private key based on the public key. In general, a private key cannot be derived based on a public key. Since the public key may be derived from the private key, the private key is generally sufficient to form the digital wallet.

A printer unit or its host securely stores a first private key associated with a first digital wallet and generated from a mnemonic phrase through a process that involves several steps of cryptographic functions. The mnemonic phrase may be printed out by the printer as means of backup for the first digital wallet. A digital asset can be transferred to the first digital wallet from any other digital wallet. There may not exist a copy of the first private key, such that the private key stored by the printer unit or its host is the only instance of the first private key. Therefore, access to digital assets stored in the first digital wallet may only be possible by means of the physical printer unit or its host. In order to steal the first digital wallet, i.e., digital assets stored in the first digital wallet, the printer unit or its host and/or the backup printed mnemonic phrase would have to be stolen physically.

A digital asset is stored in the first digital wallet. The digital asset may be a certain value of crypto currency stored in the first digital wallet. The digital asset may be a portion of crypto currency stored in the first digital wallet or the whole crypto currency stored in the first digital wallet. In order to print a physical note for accessing the digital asset stored in the first digital wallet, a second private key is created by the printer unit or its host with sufficient entropy, such that a second digital wallet is created by the printer unit. The first private key and/or the second private key may be binary code represented by a 256-character-long string of binary digits respectively or a 64-digit hexadecimal code respectively or an alphanumeric string respectively, for example. The printer unit or its host may additionally derive a second public key associated with the second private key and the second digital wallet. In a next step, the printer unit signs a transaction of the digital asset from the first digital wallet to the second digital wallet with a signature by means of the securely stored first private key using specific communication commands. The signature may be created by means of a handshaking with the securely stored first private key. The signature is based on the first private key and is only valid if the (correct) first private key is used. The transaction may either be processed at this point by the printer unit or later, e.g., by a receiver who receives the physical token. In order to process the transaction, the signature may be submitted to one or more nodes participating in a DLT network (e.g. via the Internet) in order to authorize the transaction. For example, the node from the DLT network may validate the transaction based on the signature. The node may include the transaction in a transaction block recorded on a blockchain, for example. Additionally, the second public key may be used to process the transaction.

In a next step, the printer unit provides the second private key and provides the signature of the transaction. Providing the second private key is effected by printing the second private key and/or providing the signature is effected by printing the signature.

There are three main implementations, which can be distinguished. In a first exemplary implementation, the printer unit directly processes the transaction by having a graphical user interface and means to allow a secure login into the device by a user, a selection of the digital asset assigned to the digital asset and to authorize the transaction by the user. In this implementation, the signature is provided, for example, to a ledger of a DLT system in order to authorize the transaction. The printer unit may be connected to the internet. The previously generated second private key is temporarily stored by the printer unit but is not shared digitally. Once the transaction is done, the digital asset is stored in the second digital wallet. In this case, providing the private key is effected by printing the private key on the physical note. The second wallet stores the digital asset, whereas the second private key is necessary to further assign the digital asset (e.g., a portion or the whole of a crypto currency value stored in the second digital wallet) from the second digital wallet into a designated third digital wallet, such as a digital wallet of a receiver. In summary, the physical note is generated, whereas the digital asset is accessible by means of the physical note. Without access to the physical note, the digital asset stored by the second digital wallet cannot be accessed. By (physically) transferring the physical note, the access to and therefore the ownership of the digital asset can be transferred.

In a second exemplary implementation, the printer unit does not store the first private key and does not process the transaction directly. The printer unit may instead be provided secure access to the second private key and a corresponding authorized signature by means of a command interface to an application on a host device such as the smartphone of the user of the printer unit. The smartphone provides an internet gateway, a way to securely login into a software wallet application using biometrics or alike and an advanced graphical user interface. The software wallet application represents the first digital wallet which can be custodial in the case the first private key is stored and managed online by a third party or non-custodial in the case the first private key is managed directly in the smartphone by the user. In both cases, the software wallet application is responsible for generating the second digital wallet based on selection by the user of the digital assets to be transferred, authorized by the user, and transferring to the printer as print-friendly data to create the physical note.

In a third exemplary implementation, the transaction is not processed at this point. Providing the signature is effected by printing the signature on the physical note, such that the transaction can be processed by means of the signature imprinted on the physical note. For example, a receiver of the physical note may process the transaction of the digital asset from the first digital wallet to the second digital wallet. Providing the second private key may be effected by printing the second private key or by securely providing the second private key digitally, e.g., to the sender. The second digital wallet is accessible by means of the provided second private key but does not hold the digital asset (yet). In order to transfer the digital asset from the first digital wallet to the second digital wallet, the signature imprinted on the physical note needs to be accessible in this case. In summary, also in this case the physical note is generated, whereas the digital asset is accessible by means of the physical note. Access to the physical note may be necessary to both transfer the digital asset from the first digital wallet to the second digital wallet (by means of the imprinted signature) and to access the digital asset on the second digital wallet (by means of the imprinted second private key). One advantage of this implementation is that the printer unit may operate entirely offline (the printer unit may be protected by an "air gap"), that is, without any wireless or wired data connection. This further protects the first private key. Transactions may be created purely as part of the physical note. The transaction needs to be submitted in a separate step in this implementation before the balance of the second digital wallet changes (and can be checked).

In a next step, the printer unit prints the second private key and/or the signature. Printing may be effected by inkjet printing or laser engraving, for example. The physical note may comprise a print medium with a surface on which the printer unit can print. The physical note may, for example, comprise paper, for example, a sheet of paper, a metal, or a plastic, with a surface on which the printer unit can print. Optionally, inks and print media with properties for long durability and suitable for archiving may be utilized.

The only way to extract digital assets, such as the digital asset, from the first digital wallet is by printing a corresponding physical note, such as the physical note for accessing the digital asset, by means of the printer unit. It is not possible to extract the first private key based on the signature or the second private key. The first private key remains securely stored by the printer unit and it is never exposed to the outside world.

The physical note may comprise at least one copy protection feature to protect the authenticity and uniqueness of the imprinted information on the physical note. A security feature known from regular bank notes, such as a watermark, microtext, or invisible marks, may be a copy protection feature, for example. A visual marking may be printed by the printer unit on the physical note as a copy protection feature. The visual marking may be a QR code, for example. The QR code may include a secret, hidden layer. A physical note identifier may be encoded in the visual marking. The physical note identifier may comprise a physical note identity (i.e., an identity of the physical note) and/or a timestamp. The visual marking may be used to authenticate the physical note. A related method for document authentication is for example known from WO 2021 089 598 A1.

Optionally, the secret layer of the QR code may contain compressed biometric information from the issuer of the physical note such as face recognition biometric information allowing the recipient to scan the QR code and thereafter scan the face of the issuer to verify ownership.

Optionally, the visual marking may be printed using fluorescent- or luminescent ink.

Optionally, at least one copy protection feature is applied to the physical note solely by printing, such that any print medium (e.g., a print medium without a pre-applied watermark) may be utilized.

The signature and/or the second private key may respectively be printed as a number, as a character string, as a one-dimensional barcode, or as a two-dimensional barcode (e.g., a QR code).

Overall, the disclosed method provides increased security measures for protecting digital assets such as the digital asset initially stored in the first digital wallet, which is accessible only via the printer unit. The printer unit serves as a physical counterpart of the first digital wallet. The printer unit offers cold (i.e., offline) storage of the first private key, therefore cold storage of the digital asset, and the ability to generate the physical note for accessing the digital asset.

The printer unit may comprise means to provide a graphical output, such as an electronic display. The printer unit may provide a graphical user interface (GUI) displayed at the electronic display. The printer unit may comprise means to enter commands, such as a keyboard and/or a computer mouse and/or a touchpad. For example, a command to print a physical note for accessing a defined digital asset may be entered by means of the GUI and the means to enter commands. The digital asset associated with which a physical note is to be printed may be defined in the command. The printer unit may comprise a network connection to the internet. Optionally, the printer unit may comprise a Bluetooth connection and may be connected to a personal device, such a as smartphone near the printer unit. The printer unit may be configured to be controlled via an app installed at the personal device. However, the physical note can only be printed locally by the printer unit. The printer unit may be stationary. For example, the printer unit may be a desktop device. Preferably, the printer unit may be a mobile and/or handheld and/or hand-operated printing device to allow storage in a safe vault or alike. For example, a hand-operated printing device that is manually moved over a target medium is disclosed in WO 2021 089 598 A1 (the disclosed printing device is referred to as "token"). By using a mobile printer unit, a physical note may be generated on demand with enhanced flexibility in time and location. For example, the physical note may be printed just before a payment is made at a store.

Optionally, the method for printing the physical note for accessing the digital asset may comprise the further step after printing:
- deleting any digital copy of the second private key.

By deleting any digital copy of the second private key, which may have been stored temporarily in order to print the second private key, the second digital wallet is only accessible by means of the physical note. Even if the printer unit is (physically) stolen, the second digital wallet is only accessible by means of the second private key printed on the physical note. By deleting any digital copy of the second private key directly after printing the physical note, the physical note (with the imprinted second private key) cannot be re-printed by the printer unit but can only be printed once.

Optionally, the digital asset comprises crypto currency or a digital non-fungible token (NFT). The crypto currency may be based on distributed ledger technology (DLT), for example implemented as a blockchain, whereas the first wallet and the second wallet are accounts of the DLT network. In order to process a transaction, a node (for example a mining node) of the DLT network may process the signed transaction, i.e., the node may check the signature and the validity of the transaction. The crypto currency may be, for example, Bitcoin, Ethereum, Litecoin or Ripple. The digital asset may comprise an amount of Bitcoin, for example. Alternatively, the digital asset may be a non-fungible token (NFT), which can also be stored in a digital wallet, such as the first digital wallet or the second digital wallet. In contrast to units of crypto currency, the NFT cannot be split in smaller portions.

The terms "DLT network" and "blockchain" include all forms of electronic, computer-based, distributed ledgers. These include consensus-based blockchain and transaction-chain technologies, permissioned and un-permissioned ledgers, shared ledgers, and variations thereof. A commonly known implementation of a blockchain is the Bitcoin blockchain, whereas there are numerous other implementations. A blockchain is a peer-to-peer, electronic ledger which is implemented as a computer-based decentralized, distributed system made up of blocks. The blocks are made up of recorded transactions between accounts (for example, the first digital wallet and the second digital wallet). Each transaction is a data structure that encodes the transfer of control of the digital asset between accounts in the blockchain system. The blocks contain a hash of the previous block, such that blocks become "chained" together to create a permanent, unalterable record of all transactions which have been written to the blockchain. In order for a transaction to be written to the blockchain, it must be "validated". Network nodes (miners) ensure that each transaction is valid, whereas invalid transactions are rejected from the network and therefore not written in the blockchain. If a transaction is validated, the transaction is written to the blockchain. Thus, in order for a transaction to be written to the blockchain, it must be validated by the first node that receives the transaction, whereas validating includes checking the signature. If the transaction is validated, the first node relays the transaction to other nodes in the network. Consequently, the transaction needs to be added to a new block of transactions built by a so called "miner". Finally, the block of transactions needs to be mined, i.e., added to the public ledger of past transactions (the blockchain) and accepted by the (majority of) other nodes.

The signature based on the first private key is necessary to validate the transaction of the digital asset from the first digital wallet to the second digital wallet.

Optionally, the method for printing a physical note for accessing a digital asset further includes the following step:
- deriving a second public key based on the second private key associated with the second digital wallet; wherein printing includes printing the second public key and/or an address associated with the second public key.

Based on the second public key, an address of the second digital wallet can be derived. The address may be a hash of the second public key, for example. The second public key and/or the address may be used to check digital assets (such as the digital asset) stored in the second digital wallet. By printing the second public key and/or the address, the digital assets stored in the second digital wallet can be checked easily upon receiving the physical note.

The second public key and/or the address may be printed as a number, as a character string, as a one-dimensional barcode, or as a two-dimensional barcode (e.g., a QR code), for example.

The printer unit for printing a physical note for accessing a digital asset comprises a computer-readable storage medium, whereas the computer-readable storage medium stores the first private key associated with the first digital wallet. The computer-readable storage medium may be, for example, a hard drive or a flash drive. Furthermore, the printer unit comprises a data-processing apparatus, for example a processor, comprising means for carrying out the following steps:
- creating the second private key, such that the second digital wallet is created;
- signing the transaction of the digital asset from the first digital wallet to the second digital wallet by means of the stored first private key with a signature;

- providing the second private key;
- providing the signature;

In addition, the printer unit comprises a printer configured for carrying out the following step:
- printing the second private key and/or the signature, such that a physical note is generated, whereas the digital asset is accessible by means of the physical note.

Optionally, the printer may be configured to print an identifier of the digital asset on the physical note. For example, if the digital asset is one Bitcoin, the printer may print the string "One Bitcoin" on the physical note, whereas the string is the identifier for the digital asset. Optionally, a date and/or a time may be printed on the physical note.

Optionally, the computer-readable storage medium is a secure element. The secure element may comprise a secure operating system in a tamper-resistant processor chip or in a secure component. The secure element can protect data, such as the first private key, against software attacks and hardware attacks. The secure element may be a smart card or a trusted platform module (TPM), for example. The secure element may comply with the ISO-7816-x standards. For example, the secure element may be a serial access microcontroller of the ST33Jxxx series by STMicroelectronics N.V, such as the ST33J2M0 or the ST33J1M8. The secure element may comprise an external interface complying with the ISO 7816-3 standard. By means of the secure element, the security of the printer unit can be enhanced. Specifically, the first private key and consequently the access to the first digital wallet can be further secured by means of the secure element.

Optionally, the data-processing apparatus comprises a second secure element. The second secure element may be a secure operating system in a tamper-resistant processor chip or in a secure component. The second secure element can protect data, such as the second private key and/or the signature and/or the second public key, against software attacks and hardware attacks. The second secure element may be a smart card or a trusted platform module (TPM), for example. By means of the second secure element, the security of the printer unit can be enhanced. Specifically, the second private key and consequently the access to the second digital wallet can be further secured by means of the second secure element. Optionally, the second secure element has the same properties as the secure element. Optionally, the second secure element is the secure element.

Optionally, the printer unit may be initiated by creating the first private key and storing the first private key in the computer-readable storage medium. By initially creating the first private key by the printer unit, the security of the first private key can be further enhanced since per design no copy of the first private key exists (except the version of the private key stored by the printer unit). The printer unit may derive a first public key associated with the first private key and the first digital wallet. The printer unit may share the first public key. For example, an initial note may be printed, on which the first public key may be imprinted.

By way of example, the disclosure is further explained with respect to some selected embodiments shown in the drawings. However, these embodiments shall not be considered limiting for the disclosure.
Fig. 1 schematically shows a sequence diagram of the method for printing a physical note for accessing a digital asset and a transfer of the digital asset to a receiver.
Fig. 2 schematically shows the hardware of the printer unit or its host of fig. 1

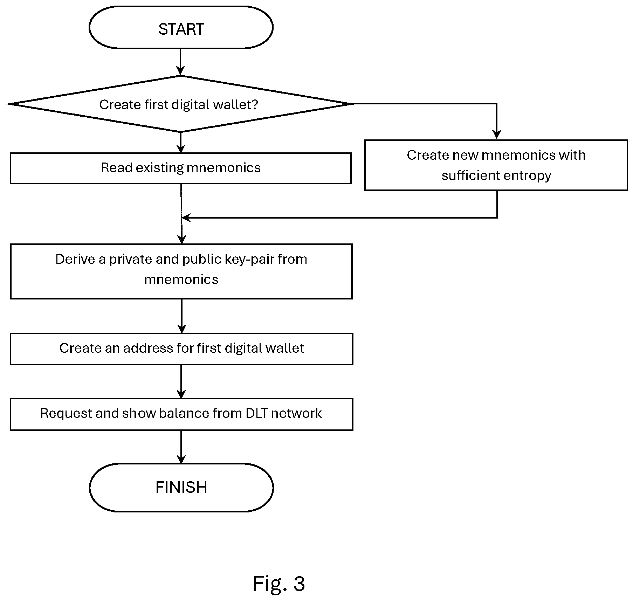

Fig. 3 shows an algorithm for the creation process of a first digital wallet of fig. 1 which may be a smart contract-based wallet.

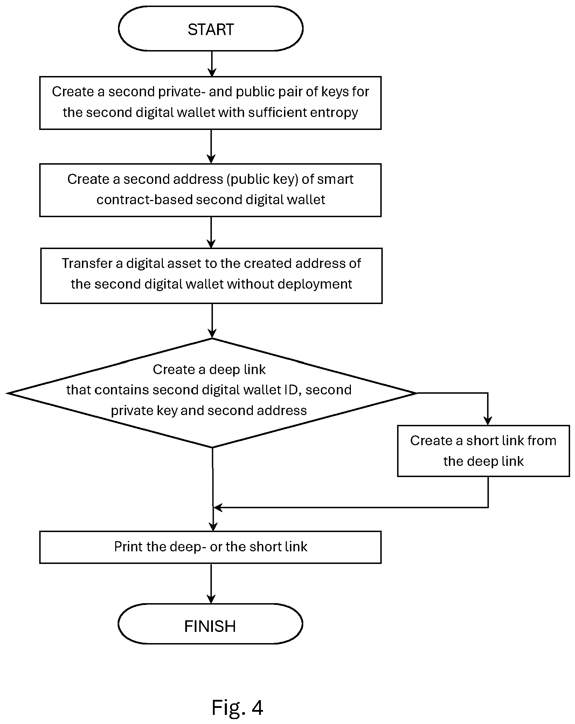

Fig. 4 shows an algorithm for the creation process of a second digital wallet of fig. 1 which in this exemplary representation is a smart contract-based wallet without deployment of the transaction.

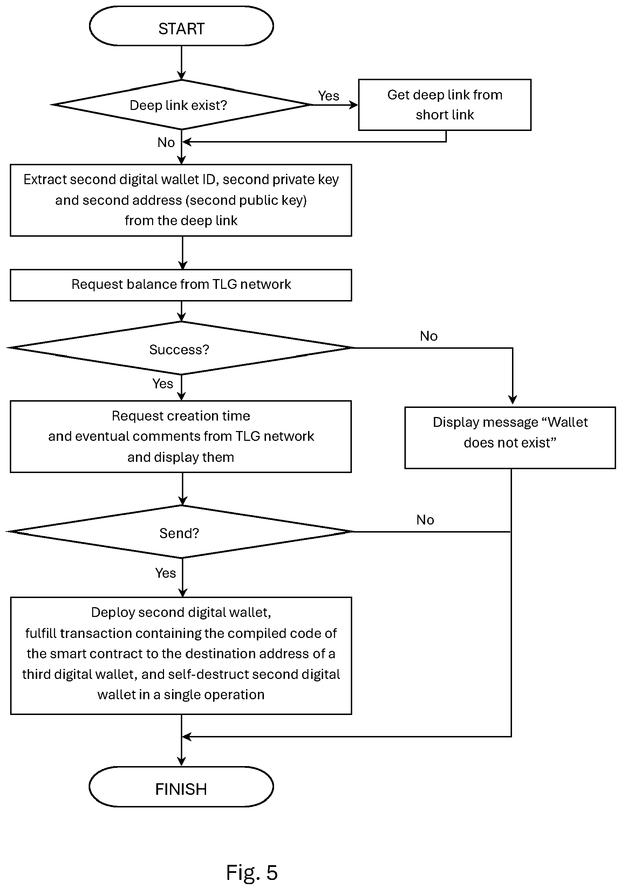

Fig. 5 shows an algorithm for the transfer process of the digital asset to the receiver with deployment of the transaction using the physical note of fig.1

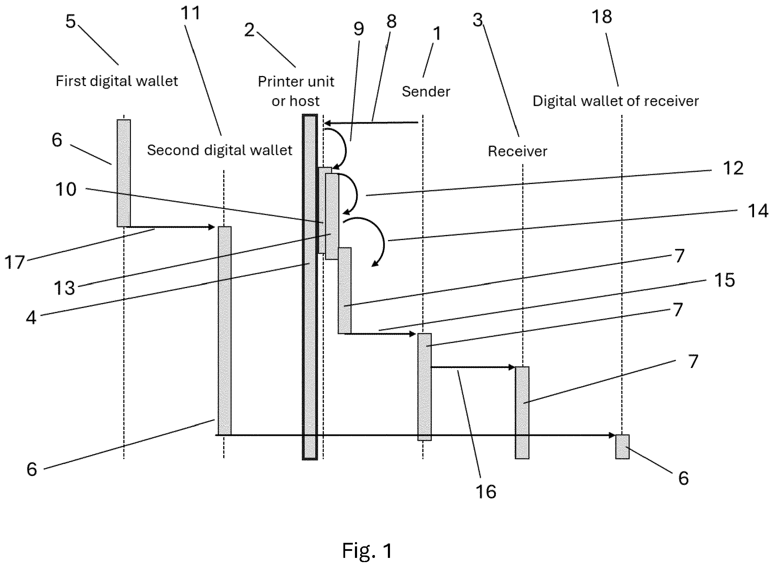

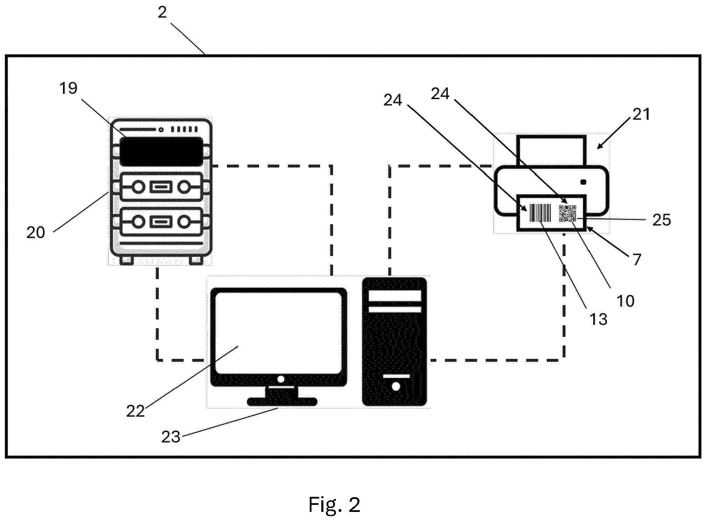

Fig. 1 schematically shows a sender 1, a printer unit or its host 2 (details see fig. 2) and a receiver 3. The sender 1 is a natural person, which has control over the printer unit or its host 2. The receiver 3 is also a natural person in this exemplary embodiment. The printer unit or its host 2 securely stores a first private key 4 associated with a first digital wallet 5. The first digital wallet 5 initially stores a digital asset 6, in this case the digital asset 6 is one Bitcoin. The method for printing a physical note 7 for accessing the digital asset 6 is initiated by the sender 1, who enters 8 a print command into the printer unit 2. The print command indicates that the physical note 7 should be printed and identifies the digital asset 6 which shall be accessible by means of the physical note 7. In this example, one Bitcoin shall be accessible by means of the physical note 7. Alternatively, only a fraction of the one Bitcoin stored in the first digital wallet 5 may be the digital asset 6.

The printer unit or its host 2 is then creating 9 a second private key 10, such that a second digital wallet 11 is created by the printer unit or its host 2. In addition, a second public key 13 associated with the second digital wallet 11 is derived based on the second private key 10. Consequently, the printer unit 2 is signing 12 a transaction of the digital asset 6 from the first digital wallet 5 to the second digital wallet 11 by means of the stored first private key 4 with a signature (not depicted). The signature is created based on the stored first private key 4. The printer unit or its host 2 does process the transaction further by forwarding the signature to a node of the Bitcoin DLT network. The printer unit or its host 2 therefore proceeds to provide the signature 8 to the Bitcoin DLT network. Providing the signature is effected by digitally forwarding the signature to the Bitcoin DLT network. In addition, the printer unit 2 provides the second public key 13 to the Bitcoin DLT network, i.e., to a node of the Bitcoin DLT network. In response to verifying the authenticity of the signature, the node of the Bitcoin DLT network validates the transaction. The digital asset 6 is therefore transferred 17 from the first digital wallet 5 to the second digital wallet 11. In a next step the printer unit 2 is printing 14 both the second public key 13 and the second private key 10 on the same sheet of paper 25 (see fig. 2), which then forms the physical note 7. Therefore, providing the second private key 10 is effected by printing the second private key 10. Consequently, the physical note 7 is generated, whereas the digital asset 6 is accessible by means of the physical note 7. The printer unit 2 is then deleting any digital copy of the second private key 10, such that the printer unit 2 has no access to the second private key 10 anymore.

The sender 1 is taking 15 the physical note 7 from the printer unit 2 and intends to transfer the digital asset 6 to the receiver 3. The sender 1 therefore (physically) hands over 16 the physical note 7 to the receiver 3.

The receiver 3 furthermore has the second private key 10 associated with the second digital wallet 11, as the second private key 10 is imprinted on the physical note 7. The receiver 3 then checks the digital assets stored in the second digital wallet 11 by means of second public key 13 imprinted on the physical note 7. Then the receiver 3 signs a further transaction from the second digital wallet 11 to a digital wallet of the receiver 18. The receiver 3 signs the further transaction by means of the second private key 10 imprinted on the physical note 7 and processes the further transaction by means of the Bitcoin DLT network. In summary, the sender 1 has utilized the printer unit 2 -with or without the assistance of its host- to print the physical note 7, with which physical note 7 the digital asset 6 is accessible. The sender 1 has received the physical note 7 and physically handed the physical note 7 over to the receiver 3. The receiver 3 has used the information imprinted on the physical note 7 to (digitally) transfer the digital asset 6 from the second digital wallet 11 to its own private digital wallet of the receiver 18. Any digital asset stored in the first digital wallet 5 can only be accessed by printing a corresponding physical note 7 and using the corresponding physical note 7.

Fig. 2 schematically shows the printer unit 2 of fig. 1 for printing the physical note 7 for accessing the digital asset 6. The printer unit 2 comprises a computer-readable storage medium 19, whereas the computer-readable storage medium 19 stores the first private key 4 associated with the first digital wallet 5. In this exemplary embodiment, the computer-readable storage medium 19 is a secure element, specifically a serial access microcontroller ST33J2M0 by STMicroelectronics N.V.

Furthermore, the printer unit 2 comprises a data-processing apparatus 20 comprising means for carrying out the following steps:
- creating the second private key 10, such that the second digital wallet 11 is created;
- signing the transaction of the digital asset 6 from the first digital wallet 5 to the second digital wallet 11 by means of the stored first private key 4 with a signature;
- providing the second private key 10; and
- providing the signature.

Additionally, the data-processing apparatus 20 is configured to derive a second public key 13 based on the second private key 10 and associated with the second digital wallet 11. The data-processing apparatus 20 is furthermore configured to forward the signature to the Bitcoin DLT network to process the transaction.

In addition, the printer unit comprises a printer 21 configured for carrying out the following step:
- printing the second private key 10 and/or the signature, such that the physical note 7 is generated, whereas the digital asset 6 is accessible by means of the physical note 7. In this exemplary embodiment, the printer 21 is configured to print the second private key 10 and the second public key 13.

The printer unit 2 furthermore comprises an electronic display 22 for displaying a graphical user interface (not depicted). The sender 1 can interact with the graphical user interface (GUI) by entering commands through a keyboard 23. For example, the printer unit is configured to receive a print command for printing the physical note 7 for accessing the digital asset 6, whereas the print command is entered by the sender 2.

The printer 21 is in this exemplary embodiment configured to print both the second public key 13 and the second private key 10 in the form of a one-dimensional barcode 24 on a sheet of paper 25. The sheet of paper 25 with the imprinted second public key 13 and the imprinted second private key 10 is the printed physical note 7. Once the printer unit 2 has printed the physical note 7, the sender 2 (or whoever else has physical access to the printer unit 2) can take the physical note 7. Alternatively to this exemplary embodiment, the printer unit 2 can be a portable handheld device.

## Claims

1. Method for printing a physical note (7) for accessing a digital asset (6) with a printer unit or its host (2), whereas the printer unit or its host (2) secretly stores a first private key (4) associated with a first digital wallet (5), comprising the steps:
- creating a second private key (10), such that a second digital wallet (11) is created by the printer unit or its host (2) ;
- signing a transaction of a digital asset (6) from the first digital wallet (5) to the second digital wallet (11) by means of the stored first private key (4) by the printer unit or its host (2) with a signature;
- providing the second private key (10) by the printer unit or its host (2);
- providing the signature by the printer unit or its host (2) ;
whereas providing the second private key (10) is effected by-printing the second private key (10) and/or providing the signature (13) is effected by printing the signature (13), such that a physical note (7) is generated, whereas the digital asset (6) is accessible by means of the physical note (7).

2. Method for printing a physical note (7) for accessing a digital asset (6) according to claim 1, **characterized by** the first digital wallet (5) and the second digital wallet (11) being both smart contract-based wallets and the transaction of the digital asset (6) during the generation of the physical note (7) is done without deployment which takes place only during access of the digital asset (6) by the receiver (3) for further transfer to the digital wallet of the receiver (18) after which, the smart contract of the second digital wallet (11) self-destroys, rendering it obsolete.

3. Method for printing a physical note (7) for accessing a digital asset (6) according to claim 1 or 2, **characterized by** the further step after printing:
- deleting any digital copy of the second private key (10).

4. Method for printing a physical note (7) for accessing a digital asset (6) according to claim 1, 2 or 3, **characterized in that** the digital asset (6) is a digital currency, a crypto currency or a digital non-fungible token.

5. Method for printing a physical note (7) for accessing a digital asset (6) according to claim 1, **characterized by** the further step:
- deriving a second public key based on the second private key (13) associated with the second digital wallet (11); wherein printing includes printing the second public key (13) and/or an address associated with the second public key (13).

6. Printer unit (2) for printing a physical note (7) for accessing a digital asset (6), with
- a computer-readable storage medium (19), whereas the computer-readable storage medium (19) securely stores a first private key (10) associated with a first digital wallet (5);
- a data-processing apparatus (20) comprising means for carrying out the following steps:
- creating a second private key (10), such that a second digital wallet (11) is created;
- signing a transaction of a digital asset (6) from the first digital wallet (5) to the second digital wallet (11) by means of the stored first private key (4) with a signature;
- providing the second private key (4);
- providing the signature;
- a printer (21) configured for carrying out the following step:
- printing the second private key (10) and/or the signature, such that a physical note (7) is generated, whereas the digital asset (6) is accessible by means of the physical note (7).

7. Printer unit (2) for printing a physical note (7) for accessing a digital asset (6) according to claim 6, **characterized in that** the computer-readable storage medium (19) is a secure element.
